# EUROPÄISCHE PATENTSCHRIFT

(11) **EP 3 691 958 B1**
(45) Veröffentlichungstag und Bekanntmachung des Hinweises auf die Patenterteilung: **03.11.2021**
(21) Anmeldenummer: 18769985.5
(22) Anmeldetag: 12.09.2018
(51) Int. Cl.: B62D 33/07, B62D 33/067, F16F 9/54

(54) **KIPPVORRICHTUNG FÜR DAS FAHRERHAUS EINES LASTKRAFTWAGENS**
TILTING DEVICE FOR THE DRIVER'S CAB OF A LORRY
DISPOSITIF DE BASCULEMENT POUR LA CABINE D'UN POIDS LOURD

(30) Priorität: 04.10.2017 DE 102017123027
(43) Veröffentlichungstag der Anmeldung: 12.08.2020
(73) Patentinhaber: Weber-Hydraulik GmbH, 74363 Güglingen (DE)
(72) Erfinder: LUTZ, Armin, 74397 Pfaffenhofen (DE); JAVDANITEHRAN, Mehdi, 70806 Kornwestheim (DE)
(74) Vertreter: Lemcke, Brommer & Partner Patentanwälte Partnerschaft mbB
(86) Internationale Anmeldenummer: PCT/EP2018/074541
(87) Internationale Veröffentlichungsnummer: WO 2019/068439

(56) Entgegenhaltungen:
- EP-A1- 0 485 724
- EP-A2- 0 384 005
- DE-A1- 2 203 452

## Beschreibung

Die vorliegende Erfindung betrifft eine Kippvorrichtung für das Fahrerhaus eines Lastkraftwagens mit einem Linearantrieb, insbesondere einem hydraulischen Zylinder/Kolben-Aggregat, der an einem Ende eine Anlenkung zur Befestigung am Fahrgestell des Lastkraftwagens und am gegenüberliegenden Ende eine Anlenkung in Form eines Anlenkauges zur Befestigung am Fahrerhaus aufweist, und mit einem drehfest am Fahrerhaus anzubringenden Anlenkbolzen für das fahrerhausseitige Anlenkauge des Zylinder/Kolben-Aggregats, wobei der Anlenkbolzen einen länglichen Querschnitt mit einer ersten, größeren Quererstreckung und einer zweiten, kleineren Quererstreckung aufweist.

Eine entsprechende Fahrerhaus-Kippvorrichtung bzw. ein Zylinder/KolbenAggregat für eine solche Kippvorrichtung sind aus der DE 2 203 452 A1 bekannt. Um Relativbewegungen des gegenüber dem Fahrgestell gefedert gelagerten Fahrerhauses nicht zu behindern, ist das fahrerhausseitige Anlenkauge des dort gezeigten Hydraulikzylinders als Langloch oder Längsschlitz ausgebildet. Der zugehörige, am Fahrerhaus angebrachte Anlenkbolzen hat somit innerhalb des Langlochs Spiel, um Relativbewegungen des Fahrerhauses während der Fahrt zu ermöglichen. Um andererseits zu verhindern, dass das Fahrerhaus beim Hochkippen nach Überwinden seines Kipptotpunkts auf Grund des Bewegungsspiels schlagartig nach vorne kippt, besitzt das Langloch am unteren Ende eine als Rasten dienende Seitenausnehmung, in die der Anlenkbolzen bei einer durch die Kippbewegung des Fahrerhauses bedingten Relativverdrehung gegenüber dem Langloch einschwenkt und dadurch bei gekippter Stellung eine Längsbewegung innerhalb des Langlochs verhindert.

Die genannte Bauform hat den Nachteil, dass die Kurvenform der Seitenausnehmung exakt an den Bewegungsablauf beim Hochkippen des Fahrerhauses angepasst sein muss und daher von der Bauform des Fahrerhauses und der genauen Position der Anlenkpunkte an Fahrerhaus und Fahrgestell abhängt. Außerdem kann sich, da ein Hochkippen des Fahrerhauses gewöhnlich verhältnismäßig selten und nur in größeren Zeitabständen erforderlich ist, in der Seitenausnehmung des Anlenkauges Schmutz anlagern, der zum Verklemmen der Kippvorrichtung beim Hochkippen des Fahrerhauses führt. Außerdem ist die Anfertigung eines Anlenkauges mit der genannten Seitenausnehmung produktionstechnisch schwierig.

Die vorliegende Erfindung hat sich daher zur Aufgabe gesetzt, eine Kippvorrichtung für das Fahrerhaus eines Lastkraftwagens anzugeben, welche modellunabhängig für eine Vielzahl unterschiedlicher Fahrzeuge geeignet ist, außerdem weniger toleranzempfindlich und weniger anfällig gegen Verschmutzung ist.

Die Aufgabe wird gelöst durch die Merkmale der Ansprüche 1 und 8. Vorteilhafte Ausgestaltungen sind den abhängigen Ansprüchen zu entnehmen.

Bei einer Kippvorrichtung der eingangs genannten Art ist erfindungsgemäß vorgesehen, dass die Augenöffnung des fahrerhausseitigen Anlenkauges des Linearantriebs einen kreisrunden Augenbereich aufweist, dessen Innendurchmesser mindestens der größeren Quererstreckung des Anlenkbolzens entspricht, sodass dieser innerhalb dieses kreisrunden Augenbereiches gegenüber dem Anlenkauge frei drehbar ist. An den kreisrunden Augenbereich schließt sich in Längsrichtung des Linearantriebs auf der von diesem abgewandten Seite ein schlitzförmiger Kulissenbereich an, dessen Schlitzbreite der kleineren Quererstreckung des Anlenkauges entspricht. Innerhalb dieses schlitzförmigen Kulissenbereichs kann sich der Anlenkbolzen, wenn sich dessen lange Querachse in Schlitzrichtung befindet, ungehindert bewegen, sodass sich genügendes Bewegungsspiel ergibt, um ein Durchfedern des Fahrerhauses gegenüber dem Fahrgestell nicht zu behindern. Eine Relativverdrehung von Anlenkbolzen und Anlenkauge findet in diesem Bereich nicht statt.

Wenn zum Kippen des Fahrerhauses die Kolbenstange des Zylinder/Kolben-Aggregats durch Druckbeaufschlagung ausgefahren wird, verschiebt sie das Anlenkauge so, dass sich der Anlenkbolzen nun im kreisrunden Augenbereich befindet, der gleichzeitig den unteren Anschlag des Anlenkauges bildet. Sobald das Fahrerhaus angekippt wird, erfolgt durch die Kippbewegung eine Relativverdrehung des Anlenkbolzens gegenüber dem Anlenkauge, sodass der Anlenkbolzen in dieser Stellung nun nicht mehr in den schmaleren Kulissenbereich passt. Das Relativspiel des Anlenkbolzens innerhalb des Anlenkauges ist somit bei gekipptem Fahrerhaus blockiert.

Da der Anlenkbolzen innerhalb des kreisrunden Augenbereichs frei drehbar ist, entfällt eine Anpassung einer Rastenkurve an die Kinematik der Kippvorrichtung, wie im Stand der Technik. Eine Relativverdrehung zwischen Anlenkbolzen und Anlenkauge beseitigt etwaigen im kreisrunden Augenbereich angesammelten Schmutz, da dieser vom Anlenkbolzen einfach beiseitegeschoben werden kann. Da im Fahrbetrieb das Zylinder/Kolben-Aggregat vom Fahrerhaus entkoppelt ist, ist die Kippvorrichtung im wesentlichen verschleißfrei.

Ein weiterer Vorteil ergibt sich dadurch, dass das Anlenkauge zweiteilig ausgeführt werden kann, mit einem ersten, den kreisrunden Augenbereich bildenden Augenteil, und einem zweiten, den Kulissenbereich bildenden Führungsteil. Die beiden Teile können lösbar miteinander verbunden, insbesondere miteinander verschraubt werden, sodass das Anlenkauge zur vereinfachten Montage und Demontage des Fahrerhauskippzylinders geöffnet werden kann. Selbstverständlich liegt auch eine unlösbare Verbindung der beiden Augenteile z.B. durch Verkleben im Rahmen der vorliegenden Erfindung.

Wird das Anlenkauge zweiteilig ausgeführt, so wird vorzugsweise in dem ersten, den kreisrunden Augenbereich bildenden Teil, ein in den schlitzförmigen Kulissenbereich des zweiten Teils mündender Übergangsbereich ausgebildet, wobei das Öffnungsmaß der Augenöffnung in diesem Übergangsbereich der kleineren Quererstreckung des Anlenkauges entspricht. Dieser Übergangsbereich verriegelt bei einer Relativverdrehung des Anlenkbolzens und blockiert somit dessen Längsspiel. Damit sind alle kräfteaufnehmenden Bereiche des Anlenkauges auf den ersten, den kreisrunden Augenbereich bildenden Teil konzentriert, während der zweite, den Kulissenbereich bildende Teil kaum Kräfte aufnehmen muss, da der Anlenkbolzen hier im Rahmen des Längsspiels und auf Grund des Schwenkfreiheitsgrades der Anlenkung des Zylinder/Kolben-Aggregats am Fahrgestell des Lastkraftwagens frei beweglich ist.

Letztgenannter Umstand ermöglicht es auch, das zweite, den Kulissenbereich bildende Teil aus einem mechanisch wenig belastbaren Material wie etwa Kunststoff herzustellen oder als einfaches metallisches Biegestanzteil auszuführen. Das den kreisrunden Augenbereich bildende erste Teil des Anlenkauges wird hingegen vorzugsweise als solides Schmiedeteil oder Metallgussteil ausgeführt und gibt dem Fahrerhaus beim Ankippen somit sicheren Halt.

Eine weitere Verbesserung ergibt sich dadurch, dass der Augenbereich oder der Kulissenbereich eine seitliche Öffnung aufweist. Diese Öffnung dient zur einfachen Montage und Demontage des Zylinder/Kolben-Aggregats, indem das Anlenkauge bei demontierter unterer Anlenkung am Fahrzeugfahrgestell über die Öffnung am Anlenkbolzen ein- bzw. ausgehängt werden kann. Die Möglichkeit, eine solche seitliche Öffnung vorzusehen, trägt dem Umstand Rechnung, dass der Anlenkbolzen innerhalb des kreisrunden Augenbereichs beim Kippen des Fahrerhauses nur eine vergleichsweise kleine relative Winkelverdrehung erfährt. Die seitliche Öffnung, deren Öffnungsmaß der kleineren Quererstreckung des Anlenkbolzens entspricht, kann somit in einem Bereich angebracht werden, der im normalen Betrieb der Kippvorrichtung nicht in Führung mit dem Anlenkbolzen ist.

Hierbei kann insbesondere vorgesehen sein, dass die seitliche Öffnung im Augenbereich ausgebildet ist und ein den Kulissenbereich begrenzender freier Schenkel sich in Richtung des Augenbereichs zumindest teilweise über die Öffnung erstreckt. Das Kulissenteil mit einseitig freiem Schenkel hat auf Grund seiner Materialeigenschaften eine gewisse Federbeweglichkeit und ermöglicht so noch variablere Schwinghübe des Fahrerhauses einerseits und eine vereinfachte Montage andererseits. Dabei verhindert der sich über die seitliche Öffnung erstreckende Schenkel gleichzeitig ein unbeabsichtigtes Herausrutschen des Anlenkbolzens aus seiner Führung.

Des Weiteren betrifft die vorliegende Erfindung ein Zylinder/Kolben-Aggregat für eine solche erfindungsgemäße Kippvorrichtung.

Weitere Vorteile und Eigenschaften der Erfindung ergeben sich aus der nachfolgenden Beschreibung von Ausführungsbeispielen anhand der Figuren. Hierbei zeigt:
- Figur 1: den Vorderteil eines Lastkraftwagens mit Fahrerhaus und Kippvorrichtung,
- Figur 2: einen Hydraulikzylinder zur Verwendung in einer erfindungsgemäßen Kippvorrichtung,
- Figur 3: eine isometrische Darstellung von Anlenkauge und Anlenkbolzen bei der erfindungsgemäßen Kippvorrichtung in einem ersten Ausführungsbeispiel,
- Figur 4: eine Draufsicht auf das Anlenkauge aus Figur 3,
- Figur 5: eine isometrische Darstellung des Anlenkauges aus Figur 3, jedoch in einer Position, wie sie beim Kippen des Fahrerhauses auftritt,
- Figur 6: eine Draufsicht auf das Anlenkauge aus Figur 5,
- Figur 7: ein zweites Ausführungsbeispiel für die Anlenkung des Kippzylinders an das Fahrerhaus in einer isometrischen Darstellung,
- Figur 8: eine Draufsicht auf das Anlenkauge aus Figur 7,
- Figur 9: ein drittes Ausführungsbeispiel für die Anlenkung des Kippzylinders an das Fahrerhaus in einer isometrischen Darstellung,
- Figur 10: eine Draufsicht auf das Anlenkauge aus Figur 9 und
- Figur 11: das Anlenkauge aus Figur 9 in einer Position, wie sie beim Kippen des Fahrerhauses auftritt.

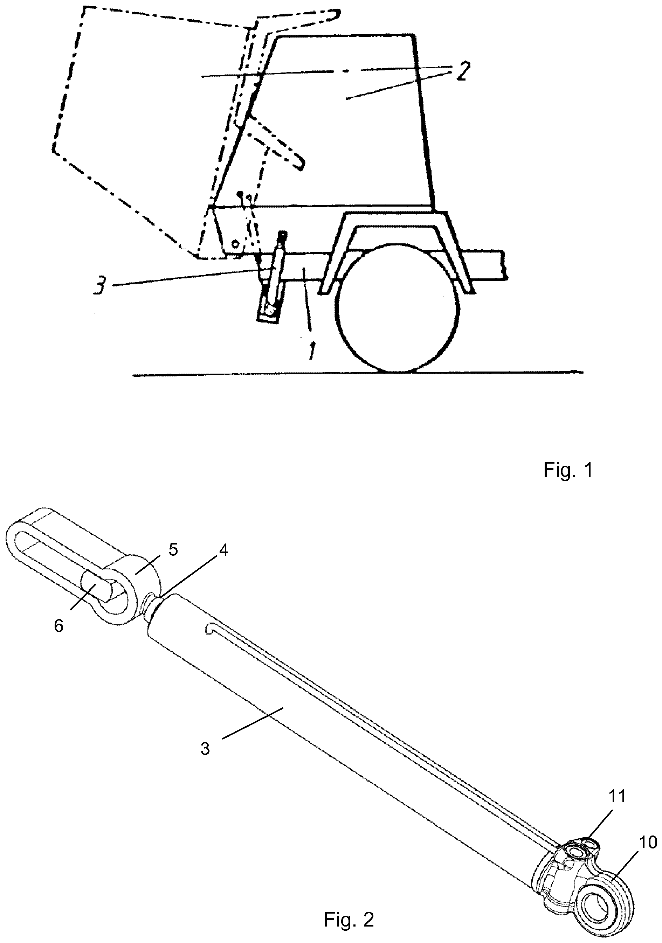

Figur 1 zeigt in einer schematischen Darstellung den vorderen Teil eines Lastkraftwagens mit einem Fahrgestell 1 und einem darauf angebrachten Fahrerhaus 2. Eine Kippvorrichtung mit einem hydraulischen Zylinder/Kolben-Aggregat 3 dient dazu, das Fahrerhaus zur Durchführung von Wartungs- und Reparaturarbeiten um eine an der Fahrzeugfront angeordnete, quer verlaufende Horizontalachse hochzukippen. Hierzu ist das Zylinder/Kolben-Aggregat 3 einerseits am Fahrgestell 1, andererseits am Fahrerhaus 2 angelenkt. Die voll gekippte Stellung des Fahrerhauses 2 ist in Figur 1 strichpunktiert angedeutet. Die in Figur 1 schematisch dargestellte Funktion einer Fahrerhauskippvorrichtung ist im Stand der Technik an sich bekannt und entspricht der in der eingangs genannten DE 2 203 452 A1 gezeigten, auf die hier zur Vermeidung unnötiger Wiederholungen vollinhaltlich Bezug genommen wird.

Das in Figur 2 gezeigte Zylinder/Kolben-Aggregat umfasst einen Hydraulikzylinder 3 mit einer Kolben- bzw. Schubstange 4, die bei Druckbeaufschlagung des Hydraulikzylinders 3 zum Hochkippen des Fahrerhauses 2 ausfährt. Am unteren Ende des Hydraulikzylinders 3 ist zur Anlenkung an das Fahrgestell 1 des Lastkraftwagens ein Anlenkauge 10 angebracht. Daneben sind zwei Hydraulikanschlüsse 11 gezeigt, über die der Arbeitsraum des Hydraulikzylinders zum Ausfahren der Kolbenstange 4 in an sich bekannter Weise druckbeaufschlagt und dessen Ringraum zu einem Tank hin entlastet werden können.

Wesentlich im Rahmen der vorliegenden Erfindung ist die Anlenkung des Zylinder/Kolben-Aggregats am Fahrerhaus 2. Hierzu ist am Ende der Kolbenstange 4 ein Anlenkauge 5 angeordnet, in welches ein Anlenkbolzen 6 eingreift. Der Anlenkbolzen 6 ist am Fahrerhaus 2 undrehbar befestigt und besitzt einen von der Kreisform abweichenden länglichen Querschnitt, indem dieser gegenüber einer zylindrischen Form an zwei gegenüberliegenden Längsseiten abgeflacht ist.

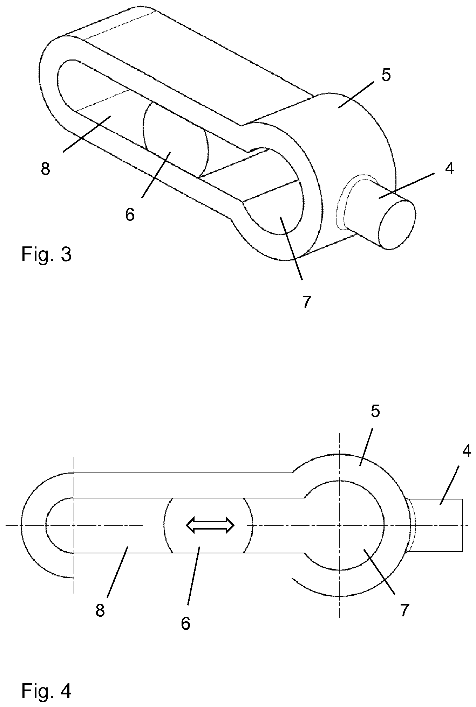

In den Figuren 3 bis 6 sind das Anlenkauge 5 und der zugehörige Anlenkbolzen 6 vergrößert dargestellt. Die Augenöffnung des Anlenkauges 5 umfasst einen kreisrunden Augenbereich 7, dessen Innendurchmesser der größeren Querachse des Anlenkbolzens 6 entspricht. In Längsrichtung des Anlenkauges 5 auf der von der Schubstange 4 abgewandten Seite setzt sich die Augenöffnung zu einem länglichen Schlitz fort, dessen Schlitzweite der schmalen Querachse des Anlenkbolzens 6 entspricht und so eine Kulisse für den Anlenkbolzen 6 bildet, innerhalb der dieser in Längsrichtung des Zylinder/Kolben-Aggregats 3 beweglich ist. Die Augenöffnung des Anlenkauges 5 hat damit in etwa die Form eines Schlüsselloches.

Die Figuren 3 und 4 zeigen die Situation, die sich einstellt, wenn sich das Fahrerhaus 2 im abgesenkten, fahrbereiten Zustand befindet. Die Schubstange 4 des Zylinder/Kolben-Aggregats 3 ist somit eingefahren. Der Anlenkbolzen 6, der undrehbar am Fahrerhaus 2 angebracht ist, befindet sich in einer in etwa mittigen Stellung im schlitzförmigen Kulissenbereich 8. Somit besteht in Schlitzrichtung genügend Spiel für den Anlenkbolzen 6, so dass ein Durchfedern des Fahrerhauses 2 durch die Kippvorrichtung nicht behindert wird.

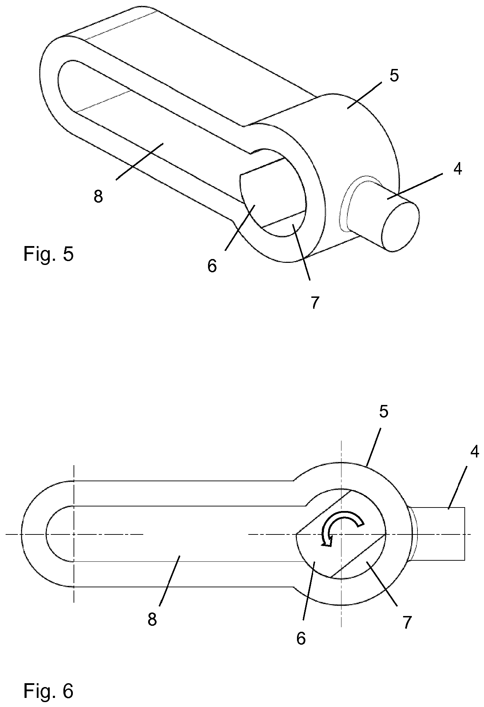

Soll das Fahrerhaus 2 hochgekippt werden, so wird der Hydraulikzylinder 3 druckbeaufschlagt und die Schubstange 4 fährt aus. Dies erfolgt im Rahmen des Längsspiels innerhalb des Kulissenbereichs 8 so weit, bis der Anlenkbolzen 6 im kreisrunden Augenbereich 7 seinen Endanschlag findet. Bei weiterer Ausfahrbewegung der Schubstange 4 wird das Fahrerhaus 2 nach oben gekippt. Hierbei ändert sich der Winkel zwischen Fahrerhaus 2 und Zylinder/Kolben-Aggregat 3, was zu einer Relativverdrehung des Anlenkbolzens 6 innerhalb des kreisrunden Augenbereichs 7 führt. Diese Situation ist in den Figuren 5 und 6 dargestellt. Sobald sich der Anlenkbolzen 6 im kreisrunden Augenbereich 7 verdreht, kann er nicht mehr in den schlitzförmigen Kulissenbereich 8 gleiten, sodass das Längsspiel des Anlenkbolzens im Anlenkauge 5 blockiert ist. Somit wird das gekippte Fahrerhaus 2 am Anlenkbolzen 6 sicher gehalten und kann nach Überwinden der Kipptotpunktlage nicht unkontrolliert nach vorne kippen.

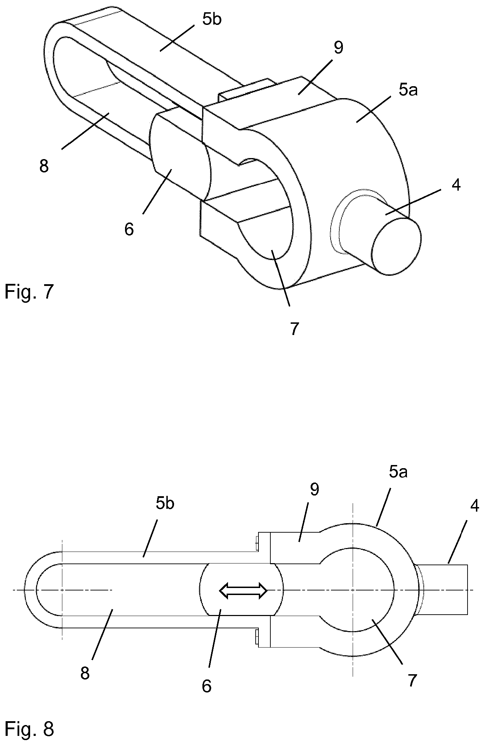

Eine Kräfteübertragung vom Zylinder/Kolben-Aggregat 3 auf den Anlenkbolzen 6 findet nur statt, wenn dieser sich im kreisrunden Augenbereich 7 befindet. Dies macht sich das in den Figuren 7 und 8 gezeigte zweite Ausführungsbeispiel zunutze, bei dem das Anlenkauge zweiteilig ausgebildet ist. Der kreisrunde Augenbereich 7 wird von einem massiven Schmiedeteil 5a gebildet, während die schlitzförmige Kulissenführung 8 von einem skelettierten Führungsteil 5b gebildet wird, das mit dem massiven Augenteil 5a zur einfacheren Montage und Demontage des Zylinder/Kolben-Aggregats lösbar verschraubt ist. Da es sich bei dem Führungsteil 5b um kein tragendes Bauteil handelt, kann dieses als einfaches Kunststoffteil oder Blechbiegeteil ausgeführt sein. Die Verbindung zwischen Führungsteil 5b und Augenteil 5a erfolgt in einem Übergangsbereich 9, in welchem die kreisrunde Augenöffnung 7 in den Kulissenbereich 8 mündet. Das Augenteil 5a erhält somit eine bauchige Gabelform.

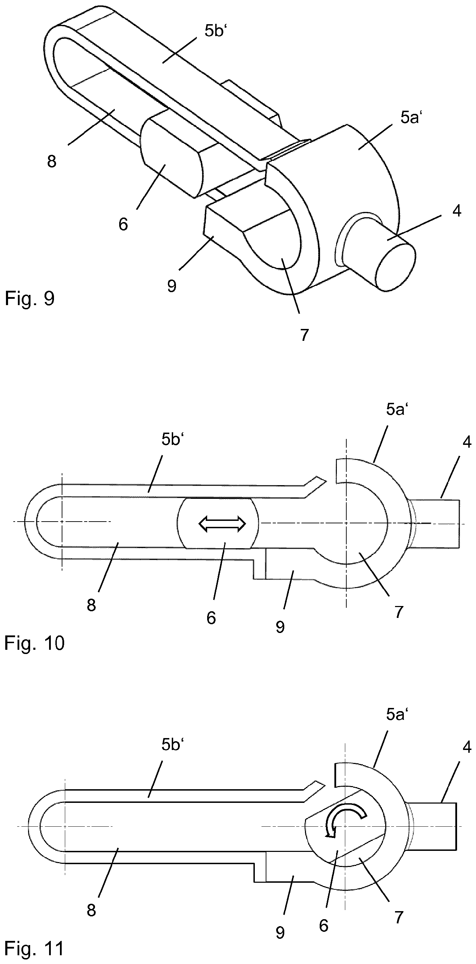

Im dritten, in den Figuren 9 und 10 gezeigten Ausführungsbeispiel ist zusätzlich eine seitliche Öffnung des Anlenkauges vorgesehen, indem einer der beiden Gabelarme des gabelförmigen Augenteils 5a' im Übergangsbereich 9 verkürzt ist und das skelettierte Führungsteil 5b' nur einseitig an dem ungekürzten Gabelarm des Augenteils 5a befestigt ist. Der zweite, freie Schenkel des Führungsteils 5b' ragt bis über die so gebildete seitliche Öffnung des Anlenkauges hinweg und verhindert so ein versehentliches Herausrutschen des Anlenkbolzens 6 aus dem offenen Auge. Der freie Schenkel des Führungsteils 5b' ist federbeweglich, sodass zur Montage das Anlenkauge um den Anlenkbolzen 6 in dessen schmaler Querrichtung eingeklinkt werden kann. Das verbliebene Kreissegment des Augenbereichs 7 bietet dem Anlenkbolzen 6 über den Schwenkwinkelbereich des Fahrerhauses 2 ausreichend Führung, wie in Figur 11 dargestellt.

In den Ausführungsbeispielen dient als Antrieb für die Kippvorrichtung ein hydraulisches Zylinder/Kolben-Aggregat. Die Erfindung ist jedoch nicht auf hydraulische Antriebe beschränkt, sondern kann grundsätzlich mit jeder Art des Linearantriebs, beispielsweise einer Zahnstange mit elektromotorisch getriebener Schnecke, realisiert werden.

## Patentansprüche

1. Kippvorrichtung für das Fahrerhaus (2) eines Lastkraftwagens mit einem Linearantrieb (3), insbesondere einem hydraulischen Zylinder/KolbenAggregat, der an einem Ende eine Anlenkung (10) zur Befestigung am Fahrgestell (1) des Lastkraftwagens und am gegenüberliegenden Ende eine Anlenkung in Form eines Anlenkauges (5) zur Befestigung am Fahrerhaus (2) aufweist, und mit einem drehfest am Fahrerhaus (2) anzubringenden Anlenkbolzen (6) für das fahrerhausseitige Anlenkauge (5) des Linearantriebs (3), wobei der Anlenkbolzen (6) einen länglichen Querschnitt mit einer ersten, größeren Quererstreckung und einer zweiten, kleineren Quererstreckung aufweist,
**dadurch gekennzeichnet, dass**
die Augenöffnung des fahrerhausseitigen Anlenkauges (5, 5a, 5b) einen kreisrunden Augenbereich (7) aufweist, dessen Innendurchmesser mindestens der größeren Quererstreckung des Anlenkbolzens (6) entspricht und an den sich in Längsrichtung des Linearantriebs (3) ein schlitzförmiger Kulissenbereich (8) anschließt, dessen Schlitzbreite der kleineren Quererstreckung des Anlenkauges entspricht.

2. Kippvorrichtung nach Anspruch 1, bei der das Anlenkauge (5a, 5b) zweiteilig ausgeführt ist, mit einem ersten, den kreisrunden Augenbereich (7) bildenden Teil (5a) und einem zweiten, den Kulissenbereich (8) bildenden Teil (5b).

3. Kippvorrichtung nach Anspruch 2, bei der die beiden Teile lösbar miteinander verbunden, insbesondere miteinander verschraubt, sind.

4. Kippvorrichtung nach Anspruch 2 oder 3, bei der der erste, den kreisrunden Augenbereich (7) bildende Teil (5a) einen in den schlitzförmigen Kulissenbereich (8) des zweiten Teils (5b) mündenden Übergangsbereich (9) umfasst, dessen Öffnungsmaß der kleineren Quererstreckung des Anlenkauges entspricht.

5. Kippvorrichtung nach einem der Ansprüche 2 bis 4, bei der das erste den kreisrunden Augenbereich (7) bildende Teil (5a) als Schmiedeteil oder Metallgussteil ausgeführt ist und bei das zweite, den Kulissenbereich (8) bildenden Teil (5b) aus einem weniger mechanisch belastbaren Material gebildet ist, insbesondere Kunststoff besteht oder als metallisches Biegestanzteil ausgeführt ist.

6. Kippvorrichtung nach einem der vorangehenden Ansprüche, bei der der Augenbereich (7) und/oder der Kulissenbereich (8) eine seitliche Öffnung aufweisen.

7. Kippvorrichtung nach Anspruch 6, bei der die seitliche Öffnung im Augenbereich (7) ausgebildet ist und ein den Kulissenbereich (8) begrenzender freier Schenkel (5b') sich in Richtung des Augenbereiches (7) zumindest teilweise über die Öffnung erstreckt.

8. Zylinder/Kolben-Aggregat (3) für eine Kippvorrichtung nach einem der vorangehenden Ansprüche mit einer Anlenkung (10) zur Befestigung am Fahrgestell (1) des Lastkraftwagens einerseits und einer am entgegengesetzten Ende befindlichen Anlenkung in Form eines Anlenkauges (5) zur Befestigung am Fahrerhaus (2), welches zur Aufnahme eines Anlenkbolzens (6) ausgebildet ist, der einen länglichen Querschnitt mit einer ersten, größeren Quererstreckung und einer zweiten, kleineren Quererstreckung aufweist,
**dadurch gekennzeichnet, dass**
die Augenöffnung des fahrerhausseitigen Anlenkauges (5) einen kreisrunden Augenbereich (7) aufweist, dessen Innendurchmesser mindestens der größeren Quererstreckung des Anlenkbolzens (6) entspricht und an den sich in Längsrichtung des Zylinder/Kolben-Aggregats (3) ein schlitzförmiger Kulissenbereich (8) anschließt, dessen Schlitzbreite der kleineren Quererstreckung des Anlenkauges entspricht.

## Claims

1. Tilting device for the cab (2) of a heavy goods vehicle, having a linear drive (3), especially a hydraulic cylinder/piston unit, which has, at one end, a coupling (10) for attachment to the chassis (1) of the heavy goods vehicle and, at the opposite end, a coupling in the form of a coupling eyelet (5) for attachment to the cab (2), and having a coupling pin (6) for the cab-side coupling eyelet (5) of the linear drive (3), which coupling pin is to be mounted on the cab (2) so as to be fixed against rotation, the coupling pin (6) having an elongate cross-section with a first, larger transverse dimension and a second, smaller transverse dimension,
**characterised in that**
the eyelet opening of the cab-side coupling eyelet (5, 5a, 5b) has a circular eyelet region (7), the internal diameter of which corresponds to at least the larger transverse dimension of the coupling pin (6) and which is adjoined in the longitudinal direction of the linear drive (3) by a slot-like guideway region (8) the slot width of which corresponds to the smaller transverse dimension of the coupling eyelet.

2. Tilting device according to claim 1, wherein the coupling eyelet (5a, 5b) is of two-part construction, with a first part (5a) forming the circular eyelet region (7) and a second part (5b) forming the guideway region (8).

3. Tilting device according to claim 2, wherein the two parts are detachably connected to one another, especially screwed to one another.

4. Tilting device according to claim 2 or 3, wherein the first part (5a) forming the circular eyelet region (7) comprises a transition region (9) which leads into the slot-like guideway region (8) of the second part (5b), the opening dimension of which transition region corresponds to the smaller transverse dimension of the coupling eyelet.

5. Tilting device according to any one of claims 2 to 4, wherein the first part (5a) forming the circular eyelet region (7) is configured as a forged part or a metal casting and wherein the second part (5b) forming the guideway region (8) is made from a less mechanically robust material, especially consists of plastics or is configured as a cut-and-bent metal part.

6. Tilting device according to any one of the preceding claims, wherein the eyelet region (7) and/or the guideway region (8) has a lateral opening.

7. Tilting device according to claim 6, wherein the lateral opening is formed in the eyelet region (7), and a free limb (5b') bounding the guideway region (8) extends at least to some extent over the opening in the direction of the eyelet region (7).

8. Cylinder/piston unit (3) for a tilting device according to any one of the preceding claims, having, at one end, a coupling (10) for attachment to the chassis (1) of the heavy goods vehicle and, located at the other end, a coupling in the form of a coupling eyelet (5) for attachment to the cab (2), which eyelet is designed to receive a coupling pin (6) which has an elongate cross-section with a first, larger transverse dimension and a second, smaller transverse dimension,
**characterised in that**
the eyelet opening of the cab-side coupling eyelet (5) has a circular eyelet region (7), the internal diameter of which corresponds to at least the larger transverse dimension of the coupling pin (6) and which is adjoined in the longitudinal direction of the cylinder/piston unit (3) by a slot-like guideway region (8) the slot width of which corresponds to the smaller transverse dimension of the coupling eyelet.

## Revendications

1. Dispositif de basculement destiné à la cabine de conduite (2) d'un poids lourd, comprenant un entraînement linéaire (3), en particulier un vérin hydraulique muni, à une extrémité, d'un rattachement articulé (10) dédié à la fixation au châssis (1) du poids lourd et, à l'extrémité opposée, d'un rattachement articulé revêtant la forme d'un œillet (5) de liaison articulée dévolu à la fixation à la cabine de conduite (2) ; et un tenon (6) de liaison articulée, conçu pour être implanté avec verrouillage rotatif sur ladite cabine de conduite (2) et affecté audit œillet (5) de liaison articulée de l'entraînement linéaire (3), situé côté cabine de conduite, lequel tenon (6) de liaison articulée est doté d'une section transversale longiligne, présentant une première étendue transversale de grand dimensionnement et une seconde étendue transversale de dimensionnement moindre,
**caractérisé par le fait que**
l'ouverture de l'œillet (5, 5a, 5b) de liaison articulée, situé côté cabine de conduite, comporte une région circulaire (7) dont le diamètre intérieur correspond au moins à l'étendue transversale de grand dimensionnement du tenon (6) de liaison articulée, et à laquelle se rattache directement, dans la direction longitudinale de l'entraînement linéaire (3), une zone de coulissement (8) en forme de fente, dont la largeur de la fente correspond à l'étendue transversale de dimensionnement moindre dudit œillet de liaison articulée.

2. Dispositif de basculement selon la revendication 1, dans lequel l'œillet (5a, 5b) de liaison articulée est de réalisation en deux parties comprenant une première partie (5a), formant la région circulaire (7) dudit œillet, et une seconde partie (5b) qui forme la zone de coulissement (8).

3. Dispositif de basculement selon la revendication 2, dans lequel les deux parties sont reliées l'une à l'autre de manière libérable, notamment solidarisées par vissage.

4. Dispositif de basculement selon la revendication 2 ou 3, dans lequel la première partie (5a), formant la région circulaire (7) de l'œillet, inclut une zone de transition (9) qui débouche dans la zone de coulissement (8) en forme de fente de la seconde partie (5b), et dont la cote d'ouverture correspond à l'étendue transversale de dimensionnement moindre dudit œillet de liaison articulée.

5. Dispositif de basculement selon l'une des revendications 2 à 4, dans lequel la première partie (5a), formant la région circulaire (7) de l'œillet, est réalisée en tant que pièce venue de forgeage ou pièce métallique venue de fonderie ; et dans lequel la seconde partie (5b), formant la zone de coulissement (8), est constituée d'un matériau moins apte à supporter des contraintes mécaniques, d'une matière plastique en particulier, ou est réalisée en tant que pièce métallique venue d'estampage et de pliage.

6. Dispositif de basculement selon l'une des revendications précédentes, dans lequel la région (7) de l'œillet, et/ou la zone de coulissement (8), présente(nt) une ouverture latérale.

7. Dispositif de basculement selon la revendication 6, dans lequel l'ouverture latérale est pratiquée dans la région (7) de l'œillet et une branche libre (5b'), délimitant la zone de coulissement (8), s'étend au moins partiellement au-dessus de ladite ouverture dans la direction de ladite région (7) de l'œillet.

8. Vérin (3) destiné à un dispositif de basculement conforme à l'une des revendications précédentes, comprenant, d'une part, un rattachement articulé (10) dédié à la fixation au châssis (1) du poids lourd, et un rattachement articulé qui est situé à l'extrémité opposée et revêt la forme d'un œillet (5) de liaison articulée, dévolu à la fixation à la cabine de conduite (2) et conçu pour recevoir un tenon (6) de liaison articulée, doté d'une section transversale longiligne présentant une première étendue transversale de grand dimensionnement et une seconde étendue transversale de dimensionnement moindre,
**caractérisé par le fait que**
l'ouverture de l'œillet (5) de liaison articulée, situé côté cabine de conduite, comporte une région circulaire (7) dont le diamètre intérieur correspond au moins à l'étendue transversale de grand dimensionnement du tenon (6) de liaison articulée, et à laquelle se rattache directement, dans la direction longitudinale dudit vérin (3), une zone de coulissement (8) en forme de fente, dont la largeur de la fente correspond à l'étendue transversale de dimensionnement moindre dudit œillet de liaison articulée.
